# EUROPÄISCHE PATENTSCHRIFT

(11) **EP 0 805 717 B1**
(45) Veröffentlichungstag und Bekanntmachung des Hinweises auf die Patenterteilung: **30.08.2000**
(21) Anmeldenummer: 96915902.9
(22) Anmeldetag: 07.06.1996
(51) Int. Cl.: B03B 9/06, B09B 3/00

(54) **RESTSTOFFAUFSPALTUNGSVERFAHREN ZUR WIEDERGEWINNUNG VON SEKUNDÄRROHSTOFFEN**
PROCESS FOR SPLITTING RESIDUES TO OBTAIN SECONDARY RAW MATERIALS
PROCEDE DE SEPARATION DE RESIDUS POUR OBTENIR DES MATIERES PREMIERES DE RECUPERATION

(30) Priorität: 09.06.1995 AT 31095 U
(43) Veröffentlichungstag der Anmeldung: 12.11.1997
(60) Teilanmeldung: 00103122.8
(73) Patentinhaber: Felber, Walter, 8010 Graz (AT)
(72) Erfinder: Felber, Walter, 8010 Graz (AT)
(74) Vertreter: Gibler, Ferdinand, Dipl.Ing. Dr. techn.
(86) Internationale Anmeldenummer: AT9600103
(87) Internationale Veröffentlichungsnummer: WO9641681

(56) Entgegenhaltungen:
- EP-A- 0 628 526
- WO-A-94/24072
- DE-A- 3 037 714

## Beschreibung

### Teil 1. Anlagenteil vor Ort für trockene Reste .

Bei einem Verfahren zur Reduzierung von bisher unverwertbaren, trockenen Rückständen aus Restmüll aus Haus-und hm-ähnlichem Gewerbemüll, die nach Trennung von Papier,Glas,Metall ,Kunststoffen ,Biomüll und nach Installierung der Clearance-Stufe "Recyclinghof" zur Entgiftung und Entfrachtung der Restmüllmenge noch verbleiben, wird im Gegensatz zu den bisherigen Verfahren und Anlagen, wie z.B. aus DE-A-3 037 714 bereits bekannt, getrachtet, Restfeinfraktion und mehrere verwertbare Fraktionen durch die Art des Erstanlagenaufbaus bereits vor Ort einen möglichst großen , hierorts ohne Schwierigkeiten verwertbaren Rest- und Störstoffanteil aus der total angelieferten Restmüllmenge abzutrennen.
Dabei wird über eine Abladerampe(o) mit geeignetem Höhenunterschied in den Aufgabetrichter eines mobilen Trommelsiebs (2) mit Steingittervorsatz (1) von 150 mm Abstandsweite und Sieblochgröße von 25 - 40 mm der Restmüll abgekippt.
Während die Feinfraktion zur weiteren Aufbereitung zu Landschaftsbau-Müllkompost für den Einsatz als Deponieabdeckmaterial oder Landschaftsbaukompost je nach Qualität einer Aufbereitungsschiene (9-13)zugeführt wird ,wird der Grobfraktionsaustrag auf eine quer zum Austrag liegende Schrägförderbandlinie (5) abgeworfen ,vor der jedoch ein in Längsrichtung des Abwurfs aufgebauter Überbandmagnetabscheider(3) angebracht ist und Fe-Metalle (und mitgerissene Kunststoffolien) in einen Fe-Metallcontainer (4) -bei Bedarf um Windsichter (14) für die Kunststoff-Folienabscheidung ergänzt - abtrennt.
Am Ende des Schrägförderbandes (5)erfolgt an einem Sortiertisch (6) eine Störstoffkontrollsichtung, ausgerichtet auf jene Materialien, die spätere Prozessabläufe entlasten, anderseits um Stoffe,deren Schmutzanhaftungen keinen gravierenden Hindernisgrund für eine Verwertung vor Ort bedeuten (z.B.Radfelgen, Glasbruch ,Textilien).

Ein Schrägförderband 2 ( 7), auf das der Restmassenstrom geführt wird, führt in den Grobfraktionscontainer bei transportfähiger Verdichtung(8), die auf eine allfällige Bahnfracht (40 t pro Waggon = 13 t Maximum pro ACTS -kompatiblem Container) ausgerichtet sein soll.

Die Feinfraktion (9-13)wird durch ein kleines Trommelsieb (9) mit 10-15 mm Maschenweite geführt ,wodurch die gröbere Mittelfraktion abgetrennt und einem Mittelfraktionscontainer (10) zugeführt ,und der der Feinfraktionsreststrom nochmals über einen Metall- oder Induktionsabscheider (11) geführt ,bevor er von einem LKW-compatiblen Container (12) zu einer moglichst nahen Intensivrottemiete(13),z.B. auf bestehenden oder ehemaligen Deponien oder einem vergleichbaren Umsetzplatz verbracht wird,um anschließend lokal als Abdeck- oder Landschaftsbaumaterial eingesetzt zu werden. Leicht-Kunststoffanteile werden mit Windsichter (14) von den Fe-Metallen abgetrennt.

Durch diese Kombination reduziert sich die Restmüllmenge um mehr als 40% des vormaligen Anlieferungsgewichts ,biogene Fraktion bleibt örtlich liegen, Sekundärrohstoffe mit örtlichen Verwertungsmöglichkeiten werden Rohstoffverwertern sofort zugeführt .Nur der Reststrom wird zu einer stationären Anlage - in faktisch beliebiger Entfernung - der Weiterbehandlung verbracht.

### Teil 2 . Anlagenteil stationär, trockener Behandlungsteil.

Die Restmenge - als Siebüberlauf anzusehen - wird vom Container auf die Abladefläche gekippt (15), nach kurzer Kontrollsichtung durch Sortierpersonal auf Problemstoffe,sperrige Störstoffe wie Teppichverbund ,... abgesucht und in den Flachbunker(16) abgeleert. Dieser ist mit einer Absaugeeinrichtung von Entlüftungsschächten, die zu einem Biofilter (20) führen,versehen.

Ein Schragförderband(17) führt aus dem Bunker auf die Anhöhe einer Sortierbühne(21) ,dabei fördert ein Windsichter (18) Leichtgut mit großer Oberfläche, hauptsächlich Kunststoff-Folien, in einen Kunststoff-Folien-Container(19) ,oberlagig wird Gebläseluft in einen Biofilter (20) per Saugzug abgesaugt. Auf der Sortierbühne besteht durch Negativ-Sortierung einer Handverlesung oder maschinellen Sortierung die Möglichkeit ,zusätzlich zur Kunststoff- Folien-Windsichtung weitere 4 Störstoffe ,die der Nachbehandlung abträglich sind und anderseits die nachfolgende nasse Zerreiß- und Wäschestufe nicht dringlich erfordern ,durch Abwurfschächte mobilen Containern zuzuführen.

Der Reststrom wird noch auf der Sortierbühne höhendosiert und unter einen oberlagigen Plättermagnet (23) geführt, um vor allem Kleinmetalle und metallhaltige Problemstoffe,wie Batterien abzuziehen.

Nach diesem Entgiftungsschritt erst wird zerkleinert.Eine Schraubenmühle (24) soll Restproblemstoffe tunlichst nicht zerstören, jedoch gequetschte Stoffe für das Angreifen von Wasser in der nachfolgenden Wäsche- und Zerreißstufe zugänglich machen.
Ein Schrägförderband 2 (25) führt den zerkleinerten Restmassenstrom zur Naßbehandlung (N).

Im Gegensatz zur bisherigen Praxis vergleichbarer Konditionierungsbestrebungen ist durch stärkere Betonung von Siebung,Sortierung und Sichtung sowie Abscheidung von Restmassenteilströmen das Verfahren mehr auf jeweils den nächstfolgenden Komponenten der Verfahrenskette als Konditionierungsschritt ausgelegt.
Die Analysen am Sortiertisch und der Reststromgewichte haben gezeigt, daß Störstoffe wie Wintersportschuhe aus GFK , Textilien,Duroplaste nmtl. und NFE-Metalle noch immer deutlich mehr als 20% des Restmassenstroms betragen, aber weder faserfähig im nassen Zerreißvorgang sind ,noch von Verwertungsbetrieben allzu hohe Anforderungen an den stofflich-sauberen Zustand gestellt werden,sondern daß vielmehr von den Verwertungsbetrieben selbst geshreddert und spezialkonditioniert wird.Auch eine Vor - behandlung -zu Granulat im Feinshredder (Teil 3/4 , Anl.25 )-ist denkbar. bevor der derart konditionierte Sekundärrohstoff (S) zum Verwerter geliefert wird.

### Teil 3/4 Anlagenteil stationär, nasser Behandlungsteil plus weitere Konditionierung für die Verwertung.

Der vonoptischer Kontrolle (26) nacherfaßte Reststrom führt zu einem Stofflöser 1(27) ,der auf die Zerreißung von Faserverbund neben der Wäsche- und Ablösefunktion von anhaftendem Schmutz auf nichtfaserfähigen Stoffen (Kunststoffe, Metalle,...) ausgerichtet sein soll. Insofern ist ein Zerreißlaufrad für Faserverbund wichtiger Komponent, der aus einer Stofflöserbaureihe ausgewählt wird.Die Spezialwendel mit 3 mm - Faserlochboden-Lochung ist neben einem Leichtfraktionsaustragssystem (31,32) und einem Schwerteilaustrag 1 (28) mit doppelter Schleuse wichtigster Elementteil der Stoffaufspaltung mit Wasser.

Die Schwerstoffschleuse setzt an der Trogbodenschräge mit einer Vertiefung an, in die beim Anrühren durch die Fliehkraft die Schwerteile Steine, Porzellan, Keramik, Kleinmetalle und Glas in der Hauptsache abgesetzt werden.Bei Schließung des oberen Schleusenschiebers und Öffnung des unteren wird die Schwerteilfraktion in einen mobilen Container abgeworfen und zur Entwässerung und Weiterbehandlung gebracht.

Die Schlammfraktion wird bei weiterer Zerreißung mit Hilfe eines effizienten Pumpenwerks über einen Hydrozyklon 1 (29) zum Faserschlammcontainer 1 in Tieflage (30) gepumpt und von hier zur Schlammbehandlungskompakteinheit 1(33) mit Flockung und Entwässerungsfunktion. Das Prozeßwasser wird mit geeigneten Pumpen zurückgepumpt (54), der Faserschlammkuchen mit rund 30% TS beim Austrag (35) wird der Kompostierung ( K ) mit Dämpfung zur Abtötung von Keimen,Pilzen ,Viren und Sporen ,Umsetzung und Restabsiebung bis zur Verkaufsfähigmachung (53,54,55 ) zugeführt, als Option (37) der Faserschlamm-Kuchenverwertung steht die Produktion von Substrat für die Pilzzucht offen. Dagegen wird das Rückstandsgranulat aus dem Hydrozyklon dem integrierten Bauschutt-Recycling-Prozeß zugeführt (BR).

Nur bei extrem guten Gärtest-Parametern würde die Biogasproduktion (B) als Option offengehalten ,an die Eindickung oder Ausbringung an den Austrag vergorenen Suspensionsfluidums anschließt,das Hauptbestandteil der Naßvergärungsverfahren ist.
Die Behandlung der Leichtfraktion geht derart vonstatten,daß der Leichtfraktionsaustrag entweder über Leichtfraktionsrechen oder über die offene Schwerteilschleuse nach einem Zweitspülvorgang mit 5000 Liter /4 % TS - der Erstzerreiß- und Austragsvorgang ist mit 10 000 Liter und etwa 5% TS vonstatten gegangen - direkt in den Leichtfraktionscontainer 1(32) in Tieflage erfolgt.Der Rechengutkorb (31) wird durch Heben , Ausschwenken und Öffnen bei der Option Zweitspülvorgang vom Rechengut entsorgt,ein mobiler Container verbringt es zur Entwässerung (35). Die Option oberlagigen Leichtfraktionsaustrags erfolgt mit dem Systemteil LOHSE - Abfall-Naßauflöser,D.Patent Nr. P 42351197-27 im Fischvorgang.

Ähnlich erfolgt der Stofflösevorgang mit dem Zielgut Feinrechengut aus Abwasserreinigungsanlagen wie Klärwerken.
Eine zuvor trockene Abziehung von Störstoffen o.ä.entfällt.
Das Feinrechengut ,hinsichtlich der Schwermetallbelastung ,wie vom Antragsteller in Auftrag gegebene Analyse gezeigt hat,um unter einer Zehnerpotenz geringer kontaminiert als der Klärschlamm derselben Kläranlage ,wird vom Feinrechengutaufgabesilo (39) auf das Schrägförderband 2 (40) aufgegeben und in die zweite Stofflöserlinie neben dem trockenen behandelten Material (41) befördert.
Der Schwerteilaustrag 2 (42), Hydrozyklon 2 (43), Faserschlamm-Zwischenbehälter 2 (44),Rechengutkorb 2 (46) und die Schlammbehandlungs-Kompakteinheit 2 (47) sind ebenso wie der Schlammkuchenaustrag 2 (48) und die Schlammverwertungsoption Pilzzuchtsubstrat (49) spiegelbildlich wie beim trockenen Eintragsmaterial ausgebildet.Desgleichen ein Windsichter zur Abtrennung von Glas (56) bei Bauschuttzuweisung (BR), und die Option einer einfachen Biogasanlage (B),je nach Eintragsgut.
Beide Schienen benötigen als Nachbehandlungsschritte gemeinsam die Anl. Leichtfraktion-Feinshredder (50) nach Leichtfraktionsaustrag aus dem Container und Leichtfraktionsentwässerung (45), an die sich nach der Option eines (51) Kunststoff-Hydrozyklons bereits die Schritte des Anl.Teils Verwertung (Teil 4) als weiterführende Konditionierung anschließen.Darunter der NFE-Induktionsabscheider (52) und der Abtransport als konditionierter Sekundärrohstoff (S). Desgleichen der Dämpfvorgang (53), der Umsetzvorgang (54 )und Absiebvorgang (55) zur Herstellung fertiger Komposte (K).

Gemeinsam wird auch der Prozeßwasserrücklauf (R) einer Anl.Modul-Einheit des Teils 3/4 verwendet.Pumpen (34) führen Prozeßwasser aus der Schlammbehandlungs-Kompakt 1 und 2 in den Prozeßwassertank (36) zurück . Dieser ist mit einem Fassungsvermögen des gesamten im Kreislauf befindlichen Prozeßwassers für den Anstartfall des Arbeitsbeginns und einer Zuleitung von Frischwasser (F) ausgestattet und am unteren Ende kegelförmig konisch bis zur Doppelschleuse für den Sinkstoffaustrag ausgebildet. Nach Schließen der oberen Schleusensperre und Öffnung der unteren ergießt sich eine Sinkstoffmenge von 0,5 m³ aus der Doppelschleuse bei jedem Stofflösevorgang in den Zufluß zu einer Filtersack-Einheit (38) der Vorfiltrierung.

Gereinigtes Prozeßwasser wird in den Prozeßwassertank zurückgeleitet. Von hier werden 10 000 und anschließend 5 000 Liter Prozeßwasser und die Frischwasserzugabe von rund 1 500 Liter pro Stofflösevorgang entnommen. Der Prozeßwasserkreislauf kann sich bei Kompostlager mit Sickerwassertank im Anlagen - verbund mit Ausnahme der Verdunstungs- und Niederschlagswasserbilanz sogar voll kreislauf schließend aufbilanzieren, jegliches Prozeßwasser wird im Abwasserkreislauf geführt.Trotzdem soll ein Prozeßwasser-By Pass zur Schonung der Rücklauf- und Pumpenführung gewährleistet sein,desgleichen Zwischentanks mit Dachwasserspeisung (ZW).

Für die übrigen trockenen Eintragsstoffe wie Siebreste, verschmutzte Kunststoffe und abgesiebten Altmüll gilt die Behandlung analog der trockenen Behandlungsschiene,für Naßabfälle analog zur nassen Behandlungsschiene.Gärtests attestieren den Einsatz der Zusatzoption Biogasanlage oder Faulturmeinspeisung(B).

Die Verwertungslinie von Faserschlammkuchen-Kompost ist an die Versetzung mit geshredderter Rinde gekoppelt .Die Verwertungslinie der übrigen Sekundärrohstoffe(S) ist darauf ausgerichtet,daß diese in sauberem Zustand die Anlage verlassen und entweder unmittelbar oder nach kurzer Aufbereitung in den Verwertungsfabriken in den Stoffkreislauf zurückgeführt werden können.Mischkunststoffe, die nach Kunststoffhydrozyklon nicht weiter separiert werden können,werden der rohstofflichen Verwertung zugeführt.Problemstoffe werden dem befugten Entsorger übergeben.
- 0: Abladerampe/Umladestation
- 1: Steingitter
- 2: Großes Trommelsieb,mobil
- 3: Überbandmagnetabscheider
- 4: Fe-Metallcontainer
- 5: Schrägförderband 1
- 6: Störstoffkontrollsichtung 1
- 7: Schrägförderband 2
- 8: Grobfraktions-Container
- 9: Kleines Trommelsieb,mobil
- 10: Mittelfraktionscontainer
- 11: Metall-lnduktionsabscheider
- 12: Feinfraktions-Container
- 13: Rottemieten
- 14: Windsichter
- T: Transport zum TEIL. 2
- S: Sekundärrohstoffverwertung
- 15: Abladefläche
- 16: Flachbunker
- 17: Schrägförderband 1
- 18: Windsichter
- 19: Kunststoff-Folien-Container
- 20: Biofilter mit Saugzügen
- 21: Sortierbühne mit 5 Störstoff-
- 22: Containern u.Abwurfschächten
- 23: Reststrom-Höhendosierung und
Fe-Kleinteile-Abscheidung
- 24: Schraubenmühle
- 25: Schrägförderband 2
Sekundärrohstoffe
Zum TEIL 3/Naßbehandlungsstufe
- 26: Aufgabe-Schrägförderband-Sicht-u.Sensorkontrolle
- 27: Stofflöser 1
- 28: Schwerteilaustrag 1 (Container)
- 29: Hydrozyklon 1
- 30: Faserschlamm-Zwischenbehälter 1
- 31: Rechengutkorb und -austrag
- 32: Leichtfraktions-Zwischenbehälter 1
- 33: Schlammbehandlungs-Kompakteinheit 1
- 34: Prozeßwasser- und Dickstoffpumpen
- 35: Faserschlammkuchenaustrag 1(Container)
- 36: Prozeßwassertank
- 37: Schlammverwertungsoption Pilzzuchtsubstrat
- 38: Filtersack-Vorfiltriereinheit
- 39: Feinrechengutaufgabesilo
- 40: Schrägförderband 2
- 41: Stofflöser 2
- 42: Schwerteilaustrag 2(Container)
- 43: Hydrozyklon 2
- 44: Faserschlamm-Zwischenbehälter 2
- 45: Leichtfraktionsentwässerung nach-austrag
- 46: Rechengutkorb 2
- 47: Schlammbehandlungs-Kompakteinheit 2
- 48: Faserschlammkuchenaustrag 2(Container)
- 49: Schlammverwertungsoption Pilzzuchtsubstrat
- 50: Leichtfraktion-Feinshredder
- 51: Verwertungsoption Kunststoff-Hydrozyklon
- 52: NFE-Induktionsabscheider
- 53: Rottemieten mit Keimtötung Dämpfung
- 54: Mietenumsetzgerät und Rindenmischer
- 55: Kompost-Absiebetrommel wie 9,TEIL 1
- 56: Windsichter
K Verkaufsfähige Komposte
S Sekundärrohstoffe
B Option Biogasanlage oder Faulbehälter
BR Bauschuttrecycling

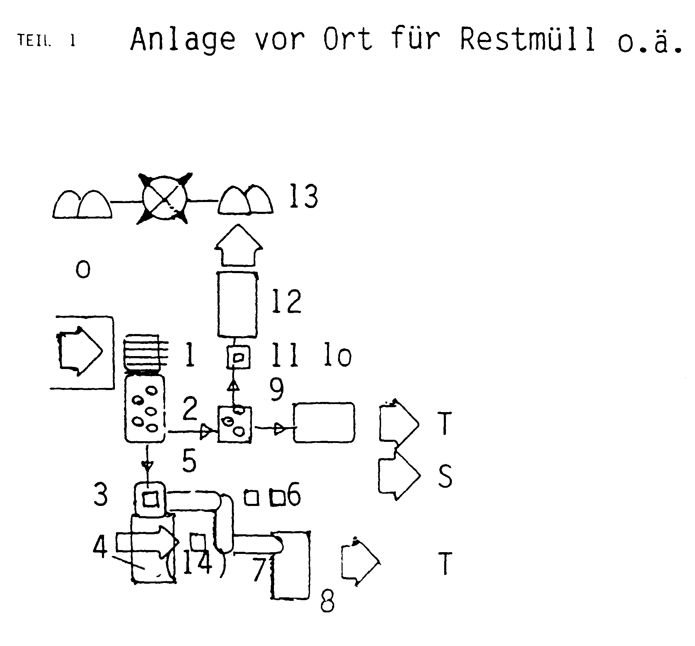

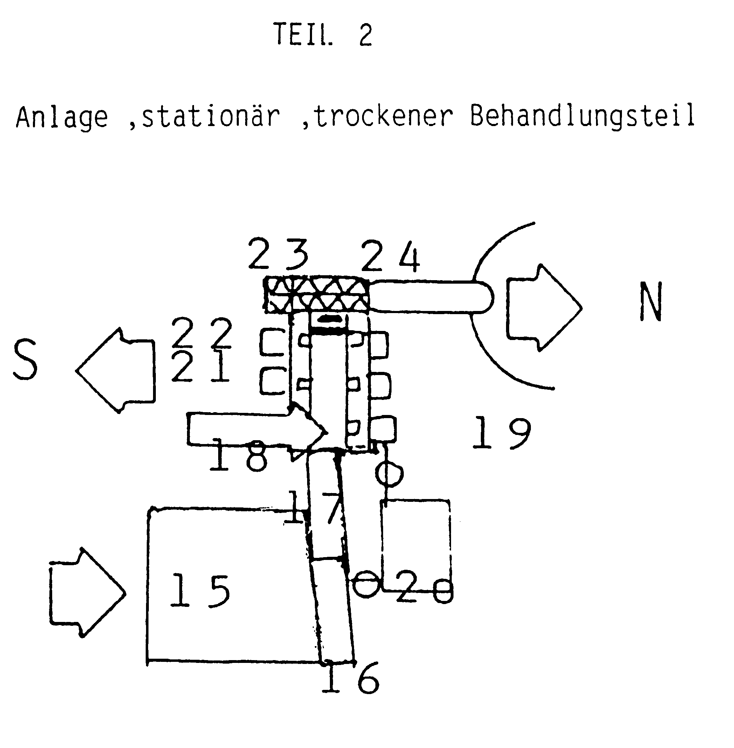

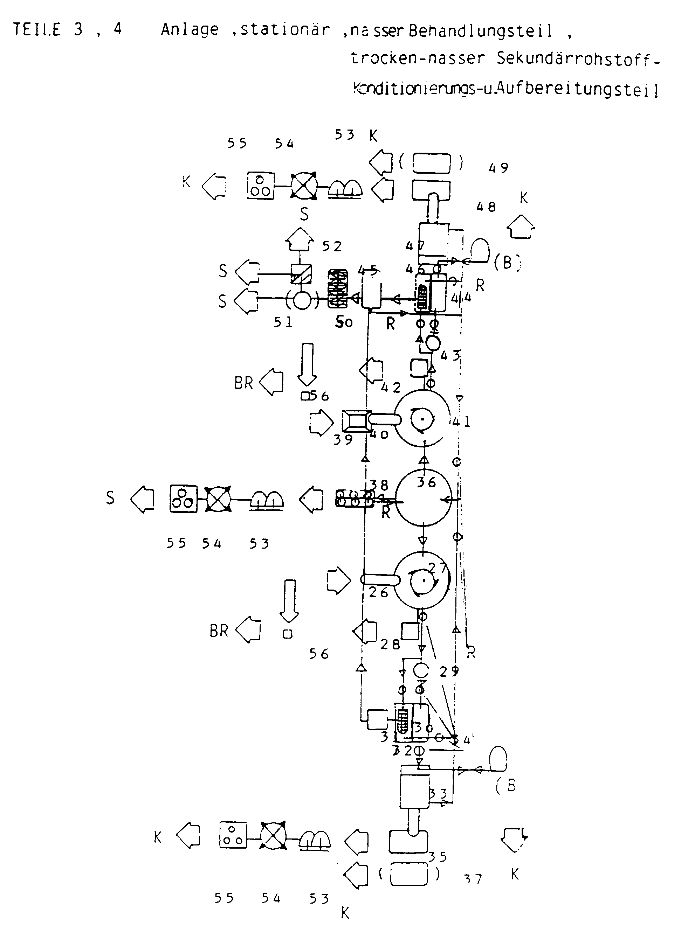

## Patentansprüche

1. Mehrstufiges Verfahren zur Wiedergewinnung von Sekundärrohstoffen aus Restmüll ,verschmutzten Kunststoffen,Altmüll und Feinrechengut aus Kläranlagen sowie Sandfangrückständen, insbesondere Reststoffaufspaltungsverfahren zur Wiedergewinnung von Sekundärrohstoffen,
**dadurch gekennzeichnet,**
daß im **ersten** Anlagenteil vor Ort für trockene Reste
a) schon am Ort der Anlieferung /der regionalen Umladestation in einer mobilen Sieb- und Abscheidekombination von trockenem stofflichen Input wie Restmüll, Siebreste aus Kompostanlagen, verschmutzten Kunststoffen und Altmüll zuerst sperriges Gut größer 150 mm durch einen Steingittervorsatz eines mobilen Trommelsiebes abgetrennt und einem schonenden Zerkleinerungsvorgang mit Sackaufreißer zugeführt oder ganze ,geschlossene Müllsäcke mit Restmüll an den Ablieferer zurückgestellt werden;
b) durch das mobile Trommelsieb der feinfraktionelle ,überwiegend biogene Massenanteil kleiner 40 mm/25 mm Stückgröße von der Grobfraktion abgesiebt wird;
c) die nach einer zweiten Feinabsiebung der Feinfraktion verbleibende Mittelfraktion 10/15 mm bis 25/40 mm für den Transport in geeignete ,bahncompatible Container abgefüllt wird ;
d) das Feingut aus dem zweiten Feinabsiebungsvorgang einer Metall-Induktionsabscheidung und anschließend einer Intensivrotte zugeführt wird und je nach Qualität nach Ausreifung im Landschaftsbau Verwendung findet;
e) die Grobfraktion nach dem Abwurfförderband für die groben Reste durch einen mindestens 1 m langen ,in Längsrichtung des Abwurfförderbandes stehenden Überbandmagnetabscheider Eisenteile über die Breite eines quer dazu wegführenden Trogförderbandes abzieht und am Ende des Magnetlaufwerks die Eisenmetalle gemeinsam mit mitgerissenen Kunststoff-Folien in einen bereitgestellten Fe-Metalle-Container abwirft und
f) beim zweiten Absiebevorgang oder unterstützt durch Windsichter die Kunststoff-Folien von den Fe-Metallen abgetrennt werden;
g) der Restmassenstrom der Grobfraktion nach e) vom Trogförderband auf einen mobilen Kontroll-Sortiertisch abgeworfen wird und hier eine erste Sichtkontrolle auf in der Region verwertbare Störstoffe erfolgt ,die gleichzeitig entweder Geruchsbildung am Transportweg verursachen oder spätere Stoffqualitäten beeinträchtigen können ;
ferner **dadurch gekennzeichnet,**
daß im **zweiten** Anlagenteil stationär und trocken, für trockene Reste
a) der Restmassenstrom nach dem ersten Teil vor Ort in eine eingehauste, stationäre Anlage verbracht und auf einer großen Abladefläche abgeleert, sofort erkennbare große Störstoffe abgesucht und der getrennten Sammlung durch Wertstoff-Container zugewiesen werden sowie davon nicht betroffene Reste in einen Flachbunker mit Absaugung und Abluftfilter (per Biofilter) abgekippt werden ;
b)anschließend ein zweiteiliges Steigförderband mit verschiedenen , steuerbaren Geschwindigkeiten und durch Sortierpersonal zu bedienendem Handstoppzug den Restmassenstrom mengenmäßig vordosieren kann und
c) anschließend auf die Höhe einer Sortierbühne transportiert, die mit Seitgebläse /Windsichtung zum Abwurf großflächiger Kunststoff-Folien in einen ersten Abwurfschacht mit darunter bereitgestelltem ,mobilem Container ausgestattet ist ;
d) für weitere 4 Störstoffe Abwurfschächte und darunter bereitgestellte ,mobile Container vorgesehen sind ,um diese sofort einer Verwertung oder einer weiteren Konditionierungsstufe am Standort zuzuführen ;
e)der nach dem Sortiergang nachgelagerte Restmassenstrom und die Mittelfraktion aus Teil 1 c) gemeinsam unter einen oberlagigen (Fe-)Plattenmagnet geführt werden und kleinstückige Resteisenmetalle und Restproblemstoffe vor der Zerkleinerung abgezogen werden
f) vom Restmassenstrom nach e)durch eine Schraubenmühle die großen und gequetschten Stücke allseitig für die nachfolgende lösliche Kraft des Wassers geöffnet werden und generell größere Stücke auf Handtellergröße zerkleinert werden ;
ferner **dadurch gekennzeichnet,**
daß im **dritten** Anlagenteil, stationär und naß , für trockene Reste
a) der Restmassenstrom nach dem zweiten Teil der trockenen stationären Behandlung über ein Schrägförderband in einen mit Wasser bei entsprechendem Temperaturmilieu befüllten Stofflöser der Bauart Hochzerreißtyp bei einem Verhältnis von 95 Teilen Wasser zu 5 Teilen Restmasse das zerkleinerte, noch leicht verschmutzte trockene Stoffgemisch
- aufgrund der Dichte der Partikel klassiert
- faserfähige Stoffe durch den Rühr- und Zerreißvorgang auffasert
- Schmutzpartikel ablöst;
b) der Trogboden-Trograndübergang in einem Winkel von 30-45% ausgebildet ist, um das durch die Fliehkraft zum Trogrand driftende Schwergut aus dem Aufgabematerial durch einen Einschnitt in diese Schrägfläche von mindestens o,5 m³ Schleusenvolumen an Raum zwischen oberem und unterem Schleusenschieber dieselbe Größe aufweist und mit Öffnungs- und Schließmechanismus das Schwergut ausgetragen werden kann ;
c) durch die 3 mm Lochung der Lochteller-Bodenplatte der durch Pumpe abgezogene Faserschlamm über einen Hydrozyklon und weiters in einen Faserschlammzwischenbehälter ,von hier in eine Schlammbehandlungskompakteinheit abgezogen ,zu ca. 30 % TS abgepreßt und zu einer Faserschlammkuchenmiete gemeinsam mit dem abgepreßten Faserschlammkuchen aus demselben Naßverfahrensschritt für nasse Reste des Feinrechengutes aus Kläranlagen verbracht und weiter konditioniert wird;
e) die um die abgelösten Schmutzteile befreiten ,nichtfaserfähigen Leichtstoffe in einem zweiten Nachspülvorgang mit vorgereinigtem Prozeßwasser bei einem Verhältnis von 95 Teilen Wasser zu 5 Teilen Leichtfraktion mit anhaftenden Fasern versetzt und durch eine Abzweigung der Schwergutschleuse in einen Leichtfraktionszwischenbehälter mit Rechengutkorb ausgetragen,entwässert und zur Weiterkonditionierung verbracht werden;
f) die Zerstörung von Keimen,Viren,Pilzen,Sporen etc. im Faserschlammkuchen aus dem Vorgang nach d) und aus der laufenden Vorfiltrierung des Prozeßwassers aus dem Prozeßwassertank mit nach unten konisch zulaufender zylindrischer Ausbildung bis zu einer Schwebfracht-Doppelschleuse mit 0,5 m³ Volumen und Abzug dieses Schwebfracht-Schlamms durch ein Filtersacksystem nach gemeinsamer Faserschlammkuchenkompostierung durch Dämpfung der Miete daraus mittels mobilem Dämpfsystem erfolgt ;
g) für trockene Rückstände aus Siebanlagen,aus Kompostanlagen und Altmüllaufbereitung in gleicher Weise wie für Restmüll bis zum dritten Anlagenteil f) erfolgt ;
h) die Behandlung verschmutzter Kunststoffe aus der Gelben Tonne bzw.dem Gelben Sack mit der Zerkleinerung durch die Schraubenmühle wie beim zweiten Anlagenteil f) beginnt ,sofern nicht eine ähnliche Vorbehandlung beim Lieferanten bereits erfolgt;
i) die Behandlung von Feinrechengut und Sandfangrückständen aus Kläranlagen o.ä. mit direkter Aufgabe in den Stofflöser wie beim dritten Anlagenteil a) beginnt ;
ferner **dadurch gekennzeichnet,**
daß im **vierten** Anlagenteil als weitere Konditionierung für die Verwertung)
a) das erste Ziel die Aufbereitung zu vermarktungsfähigen Sekundärrohstoffen in maximalem Ausmaß als werkstoffliches Recycling und die Bereithaltung und Zwischenlagerung von sauberen Restrückständen als rohstoffliche Verwertung bis zur Abholung durch die Verwerter ist; durch die 2-stufige Naßaufbereitung der Leichtfraktion die Kunststoffe mit Dichte leichter 1 /schwerer 1 abgetrennt und gleichzeitig deren Heizwert infolge Verschmutzungsreduktion auf bis 30.000 KJ/kg Hᵤ steigt;
b) Überkorn aus dem Hydrozyklon einen Induktionsabscheider zur Abtrennung aller Metalle durchläuft und der nichtmetallische Überlauf dem Bauschuttrecycling zugewiesen ,der metallische dem Metallrecycling zugewiesen wird ;
c) die gereinigte Schwerfraktion mittels Windsichtung Glasbruch von Steinkorn abtrennt und Nichteisenmetalle durch einen NFE-Abscheider abgezogen werden;
d) das reine Leichtfraktionsgemisch mit Separator getrocknet ,feingeshreddert und das Granulat auf leichte Kunststoffe für werkstoffliches Recycling und übrige Kunststoffe und Reststörstoffe für rohstoffliches Recycling separiert wird ;
e) der abgepreßte Faserschlammkompost entweder zur Rottemiete verbracht, gedämpft,umgesetzt und nach der Heißphase von Reststörstoffen feinabgesiebt und mit Rinde bis zur Ausreifungszeit versetzt wird oder
f) auf ein geeignetes K-N-P -Verhältnis bei einem Trockensubstanzgehalt von 32-38% als Pilzzuchtsubstrat konditioniert wird;
g) nur die Mischung zwischen Faserschlammkuchen aus Feinrechengut und Faserschlammkuchen aus Feinfraktion trockener Reststoffe mindestens im Verhältnis 1:1 gewählt wird ,um die Grenzwerte von Gartenkompost nach Ö-Norm S 2200 B-Kompost bzw.Qualitätskompost nach Düngemittelverordnung zu unterschreiten.

## Claims

1. Multi-stage process for recovering secondary raw materials from tailings, soiled plastics, rubbish and fine strainings from sewage treatment plants as well as from sand residues, in particular a process for splitting residues to recover secondary raw materials,
characterized in that
in the first facility section on location for dry residues
a) already on location at the delivery place/the regional transfer station in a mobile combination of screening and separation of dry input material, such as rubbish, screen overflow from composting facilities, soiled plastics and rubbish, first bulky material larger than 150 mm is separated through a rock screen attachment of a mobile drum screen and conveyed to a gentle crushing process with bag opener or whole closed garbage bags with rubbish returned to the supplier;
b) the fine fraction which is mostly biogenic, with a particle size of less than 40mm/25 mm is separated from the coarse fraction by the mobile drum sieve;
c) the middle fraction 10/15 mm to 25/40 mm, which remains after a second fine screening of the fine fraction, is filled into containers suitable for rail transport;
d) the fine strainings from the second fine screening process are conveyed to a metal induction separation and thereafter to an intensive rotting stack and - depending on the quality - are used in landscaping after being cured;
e) the coarse fraction after the discharge conveyor for the coarse residues extracts by way of an at least 1 m long overhead magnet separator which is oriented parallel to the longitudinal direction of the conveyor, ferrous particles across the width of a conveyor extending transversely from the magnet separator and discharges the ferrous particles at the end of the magnet gear - together with the entrained plastic foils - into a provided ferrous metal container, and
f) the plastic foils are separated from the ferrous metals in the second screening process or through air separators;
g) the mass flow rate of the coarse fraction residue according to e) is discharged from the tub conveyor to a mobile control sorting table, where a first visual control is carried out of the contaminants which can be recovered in the region and which also either cause emission of an odor during transport or which can subsequently diminish the material quality;
further characterized in
that in the second facility section, stationary and dry, for dry residues
a) the mass flow rate of the residue from the first section is conveyed on location to a housed stationary facility and discharged onto a large discharge area, where large contaminants are immediately identified and separately collected in containers for valuable substances, whereas the remaining residues are dumped into a flat bunker having an exhaust and filters for the exhausted air (through biofilters);
b) subsequently, a two-part inclined conveyor having various controllable speeds and a manual stop cord to be operated by the sorting personnel, is adapted to quantitatively proportion the mass flow rate of the residue, and
c) subsequently transports the residue to the elevation of a sorting stage which is provided with a lateral blower/air separator for discharging large scaled plastic foils into a first discharge chute having a mobile container provided underneath the container;
d) for additional 4 contaminants, there are provided discharge chutes and mobile containers for conveying the contaminants for immediate use or to a further conditioning stage on location;
e) the mass flow of the residue after the sorting process together with the middle fraction from part 1 c) are conveyed underneath an overhead (Fe)plate magnet to extract small residual ferrous metal pieces and difficult residues before crushing;
f) from the mass flow of the residue following step e) the large and crushed pieces are opened on all sides with the help of a screw mill to the dissolving power of the subsequent applied water, wherein larger pieces are generally reduced to palm size;
further characterized in
that in the third facility section, stationary and wet, for dry residues
a) the residue mass flow, following the second part of the dry stationary treatment via an inclined conveyor belt in a pulper of the high consistency chopping type filled with water at a respective temperature medium, and having the consistency of 95 parts water to 5% residue mass, classifies the crushed and still slightly soiled dry mixture based on the density of the particles, separates into fibers material which can be separated into fibers by stirring and ripping, dislodges dirt particles;
b) the trough bottom- trough rim transition is formed at an angle of 30° - 45° for discharging the heavy substances which drift from the feed stock to the vat rim due to the centrifugal force, through an opening in this inclined surface of at least 0.5 m³ volume in the lock between the upper and lower lock gate, so that the heavy material has the same size and can be discharged with an opening and closing mechanism;
c) the fiber sludge which is drawn by a pump through the 3 mm holes of the so perforated bottom plate, is then withdrawn by way of a hydrocyclone and from there into an intermediate fiber sludge container, from there into a sludge treatment compacting unit, pressed to about 30% dry substance, and then conveyed to a fiber sludge stack together with the pressed fiber sludge cake from the same wet process step for wet residues of the fine strainings from sewage treatment plants and then conditioned further;
e) the light materials which are free from dislodged dirt particles and cannot be separated into fibers, are then in a second post-rinse process mixed with pre-cleaned process water in a ratio of 95 parts water to 5 parts light fraction with adhering fibers and discharged through a branch of the lock designated for heavy materials into an intermediate light fraction container with a strainer basket, thereafter dewatered and conveyed for additional conditioning with water;
f) germs, viruses, fungus, spores and so on, which are present in the fiber sludge cake generated by the process according to d) and by the ongoing pre-filtration of the process water from the process water tank which has a cylindrical shape with a conical neck extending towards the bottom portion and with a double lock for suspended materials with a volume of 0.5 m³, allowing withdrawal of the suspended sludge through a filter bag system, are destroyed by steam injected into the stack by a mobile steam system, after composting of the combined fiber sludge cake;
g) the same process used for tailings is also used for dry residues from screening facilities, from composting facilities and rubbish processing, up to the third facility section f);
h) soiled plastics from yellow waste and the yellow bag, respectively, are processed starting with crushing in the screw mill as in second facility section f), unless the supplier has already performed a similar pre-treatment;
i) strainings and sand residues from sewage treatment plants and the like are processed by directly conveying these materials into the pulper, as in third facility section a);
further characterized
in that in the fourth facility section as additional conditioning for use
a) the primary goal is processing into marketable secondary raw materials to the greatest extent possible as materials recycling and the readiness and intermediate storage of clean residues as raw material recycling until picked up by the user, by separating the light fraction of the plastics with a density lighter 1/ heavier 1 through two-stage wet processing, thereby increasing their caloric value up to 30,000 KJ/kg Hᵤ due to the reduced quantity of soiled material;
b) screen overflow from the hydrocyclone passes through an induction separator for separating all metals, whereas the non-metallic overflow is directed to the construction debris recycling and the metallic overflow is directed to the metal recycling;
c) in the cleaned heavy fraction, broken glass is separated from rock particles through air separators, whereas non-ferrous metals are extracted with a separator for non-ferrous metals;
d) the pure light fraction mixture is dried with a separator and finely shredded, and the granulate is separated into light plastics for recycling of materials and other plastics and residual contaminants for recycling of raw material;
e) the pressed fiber sludge compost is either conveyed to a rotting stack treated with steam, turned over and, after the hot phase, finely strained to remove residual contaminants and mixed with bark until cured, or
f) the pressed fiber sludge compost is conditioned to attain a suitable K-N-P ratio with a dry matter contents of 32 - 38 % for use as a substrate for cultivating mushrooms;
g) there is only selected the mixture between the fiber sludge cake from fine strainings and the fiber sludge cake from the fine fraction of dry residues with a ratio of at least 1:1 in order to stay below the Austrian standard "Ö-Norm S 2200" for "B compost" or high quality compost according to the "Fertilizer Regulation".

## Revendications

1. Procédé en plusieurs étapes pour la récupération de matériaux secondaires dans les déchets résiduels, les plastiques sales, les vieux déchets et les résidus de filtration sur grille fine de stations d'épuration ainsi que dans les résidus de dessablage, en particulier procédé de fractionnement des résidus pour la récupération de matériaux secondaires, caractérisé en ce que dans la première partie d'installation sur site destinée aux résidus secs,
a) les grosses masses de matière de plus de 150 mm sont séparées, dès le site de dépôt/le poste régional de transbordement, de la matière sèche fournie telle que des déchets résiduels, des restes de tamisage d'installations de compostage, des plastiques souillés et des déchets anciens, sur une première grille à pierres d'un crible à tambour mobile dans un combiné mobile de criblage et de séparation, et acheminées vers un broyage non agressif avec dispositif d'ouverture des sacs, ou bien les sacs fermés contenant des déchets résiduels sont renvoyés à l'expéditeur ;
b) le crible à tambour mobile sépare de la fraction grosse la fraction fine, d'origine principalement biologique, dont les particules ne mesurent pas plus de 40/25 mm ;
c) la fraction moyenne de 10/15 à 25/40 mm restant après un deuxième criblage fin est déposée dans des conteneurs adéquats, pouvant être transportés par rail, en vue de son transport ;
d) les fines issues de la deuxième opération de criblage fin sont amenés à un poste de séparation des métaux par induction puis soumises à un pourrissage intensif et, selon leur qualité après maturation, utilisées dans l'agriculture ;
e) la fraction grosse, après le convoyeur à bande d'évacuation destiné aux gros résidus, extrait les morceaux de fer grâce à un séparateur magnétique en hauteur, long d'au moins 1 m et s'étendant dans le sens longitudinal du convoyeur d'évacuation sur la largeur d'un convoyeur à auge circulant perpendiculairement à celui-ci et, au bout du convoyeur magnétique, dépose les métaux ferreux et les feuilles de plastique entraînées en même temps dans un conteneur pour métaux ferreux et
f) les feuilles de plastique sont séparées des métaux ferreux lors du deuxième criblage ou avec l'aide de séparateurs à air ;
g) le flux résiduel de la fraction grosse est rejeté après e) par le convoyeur à auge sur une table de tri de contrôle et y est soumis à un premier contrôle visuel des contaminants recyclables dans la région qui peuvent dégager des odeurs sur le trajet de transport ou dégrader la qualité ultérieure des matériaux ;
caractérisé en outre en ce que dans la deuxième partie d'installation, stationnaire et sèche, destinée aux résidus secs,
a) le flux de matière résiduel est amené, après la première partie sur site, dans une installation stationnaire enclose, et déversé sur une grande surface de chargement, les gros contaminants visibles sont recherchés et collectés séparément dans des conteneurs à matériaux, et les restes non concernés sont déversés dans une cuve peu profonde avec aspiration et filtre (biofiltre) d'extraction d'air ;
b) un convoyeur ascendant en deux parties à vitesse variable et réglable et arrêt manuel actionné par le personnel chargé du tri permet de doser le débit du flux de matières résiduelles et
c) transporte celui-ci au niveau d'une estrade de tri équipée d'une soufflerie latérale/de séparateurs à air pour éjecter les grandes feuilles de plastique dans une première descente d'évacuation sous laquelle se trouve un conteneur mobile ;
c) des descentes d'évacuation sous lesquelles se trouvent des conteneurs mobiles sont prévues pour quatre autres contaminants, afin d'acheminer immédiatement ceux-ci vers le recyclage ou une autre étape de conditionnement sur le site ;
e) le flux de matière résiduelle entreposé après le tri et la fraction moyenne issue de la partie 1c) passent ensemble sous un aimant à plaques (de fer) situé au-dessus et les petits restes de fer et les matières pouvant poser problème sont extraits avant le broyage ;
f) les gros morceaux et les morceaux écrasés du flux de matières résiduelles issu de e) sont ouverts sur tous les côtés par un broyeur à vis en vue de la dissolution par l'eau qui va suivre et les gros morceaux sont réduits à la taille de la paume de la main ;
caractérisé en outre en ce que dans la troisième partie d'installation, stationnaire et humide, destinée aux résidus secs,
a) le flux de matières résiduelles est amené par un convoyeur oblique, après la deuxième partie du traitement stationnaire à sec, dans une cuve de dissolution remplie d'eau à une température appropriée, du type malaxeur à broyage poussé, où la proportion est de 95 parties d'eau pour 5 parties de résidus et où le mélange de matières sèches broyé, encore légèrement souillé,
- est classé en fonction de la densité des particules,
- les matières fibreuses étant désagrégées par l'opération d'agitation et de lacération;
- les particules de saleté sont dissoutes ;
b) la transition entre le fond et le bord de l'auge forme un angle de 30 à 45 % et les matières lourdes dérivant vers le bord sous l'effet de la force centrifuge peuvent être évacuées par une ouverture dans cette surface oblique, d'un volume de sas d'au moins 0,5 m entre la vanne supérieure et inférieure du sas, avec un mécanisme d'ouverture et de fermeture ;
c) la boue de fibres aspirée par une pompe à travers les perforations de 3 mm de la plaque de fond perforée passe dans un hydrocyclone et un réservoir intermédiaire à boue de fibres pour passer dans une unité compacte de traitement des boues, pressée jusqu'à environ 30 % de matière sèche et amenée à un silo à tourteau de boue de fibres avec le tourteau de fibres pressé résultant du même procédé par voie humide pour les résidus de grille fine de station d'épuration humides, puis à la suite du conditionnement ;
e) les matières légères non fibreuses débarrassées des particules de saleté sont additionnées, dans une deuxième étape de rinçage, d'eau de process purifiée à raison de 95 parties d'eau pour 5 parties de fraction légère avec fibres adhérentes, évacuées par une bifurcation du sas à matières lourdes vers un réservoir intermédiaire à fraction légère avec panier de criblage, déshydratées et amenées vers la suite du conditionnement ;
f) la destruction des germes, virus, champignons, spores etc. dans le tourteau de fibres issu de l'opération selon d) et du préfiltrage de l'eau de process sortant de la cuve d'eau de process selon une configuration conique vers le bas jusqu'à un double sas à particules en suspension d'un volume de 0,5 m³, avec extraction de cette boue de particules en suspension par un système de filtre à sac vers un compostage commun des tourteaux de fibres, par exposition à la vapeur du silo en résultant au moyen d'un système mobile de génération de vapeur ;
g) le procédé est le même que pour les déchets résiduels, jusqu'à la troisième partie d'installation f), pour les résidus secs d'installations de criblage, de compostage et de traitement des vieux déchets ;
h) le traitement des plastiques sales provenant du tri sélectif des ordures ménagères commence avec un broyage par le broyeur à vis comme dans la partie d'installation f), si un traitement analogue n'a pas déjà été effectué par le fournisseur ;
i) le traitement des résidus de filtration sur grille fine et de dessablage des stations d'épuration et similaires débute par le dépôt direct dans la cuve de dissolution, comme dans la troisième partie d'installation a) ;
caractérisé en outre en ce que dans la quatrième partie d'installation, pour la poursuite du conditionnement en vue du recyclage,
a) l'objectif premier est la préparation d'un maximum de matériaux secondaires pouvant être revendus (recyclage des matériaux) et l'entreposage de résidus propres (valorisation des matériaux) jusqu'à leur récupération par l'entreprise de valorisation ; le traitement par voie humide en deux étapes de la fraction légère sépare les plastiques d'une densité supérieure à 1 ou inférieure à 1 et augmente simultanément leur pouvoir calorifique jusqu'à 30 000 kJ/kg H_{U} du fait de la réduction des contaminations ;
b) le rebut surclassé de l'hydrocyclone traverse un séparateur à induction pour la séparation de tous les métaux, et les grosses particules non métalliques sont acheminées vers le recyclage des gravats, les particules métalliques vers le recyclage des métaux ;
c) dans la fraction lourde nettoyée, les éclats de verre sont séparés de éclats de pierre par un séparateur à air et les métaux non ferreux sont extraits par un séparateur de métaux non ferreux ;
d) le mélange de fraction légère nettoyé est séché par un séparateur, déchiqueté finement, et les granulés de plastiques légers sont séparés pour recyclage du matériau, les autres plastiques et autres contaminants en vue de la valorisation des matériaux ;
e) le compost de boues de fibres pressée est amené à un bac de pourrissage, exposé à la vapeur, transformé et tamisé après la phase chaude pour éliminer les résidus d'autres matériaux, puis additionné d'écorce jusqu'à maturation complète, ou
f) conditionné pour obtenir un rapport K-N-P adéquat avec un taux de matière sèche de 32 à 38 % pour servir de substrat de champignonnière ;
g) seul le mélange de tourteau de fibres provenant des résidus de filtration sur grille fine et de la fraction fine des résidus est sélectionné, dans un rapport d'au moins 1 pou 1, pour respecter les limites imposées pour le compost de jardin selon la norme autrichienne Ö-Norm S 2200 (« compost B ») ou le compost de qualité selon l'ordonnance sur les fertilisants.
